# EUROPEAN PATENT SPECIFICATION

(11) **EP 2 956 701 B1**
(45) Date of publication and mention of the grant of the patent: **22.08.2018**
(21) Application number: 14751641.3
(22) Date of filing: 14.02.2014
(51) Int. Cl.: F16L 11/12, H01B 7/36, A62C 35/68

(54) **METHOD OF IDENTIFICATION A SPRINKLER ASSEMBLY**
IDENTIFIZIERUNGSMETHODE FÜR EINEN SPRINKLER
METHODE D'IDENTIFICATION POUR UN SPRINKLER

(30) Priority: 15.02.2013 US 201361765233 P
(43) Date of publication of application: 23.12.2015
(73) Proprietor: Victaulic Company, Easton, PA 18040 (US)
(72) Inventor: SAVAGE, Thomas, C., Doylestown, PA 18902 (US); THAU, Lawrence, W., Jr., Flemington, NJ 08822 (US)
(74) Representative: De Anna, Pier Luigi
(86) International application number: PCT/US2014/016340
(87) International publication number: WO 2014/127176

(56) References cited:
- EP-A1- 1 079 162
- DE-A1- 3 840 721
- US-A- 3 083 736
- US-A- 3 650 059
- US-A- 5 816 622
- US-A- 6 079 135
- US-A1- 2004 084 203
- US-A1- 2004 103 949
- US-A1- 2004 103 949
- US-A1- 2010 282 354
- US-A1- 2011 215 566
- US-A1- 2012 097 284
- US-B1- 6 488 097

## Description

### Cross Reference to Related Application

This application is based upon and claims priority to U.S. Provisional Application No. 61/765,233, filed February 15, 2013, and hereby incorporated by reference.

### Field of the Invention

This invention relates to a sleeve positionable on a flexible conduit assembly for connecting sprinklers to branch lines in a fire suppression system, the sleeve serving to identify characteristics of the flexible conduit assembly.

### Background

Fire suppression sprinkler systems used, for example, in structures such as office buildings, hotels, warehouses and private residences have a piping network comprising a riser pipe connected to a source of pressurized fire suppressing fluid, for example, a liquid, such as water, or a gas, such as halon. Branch pipe lines are connected to the riser pipe at each floor of the structure and extend throughout each floor so that fire suppressing fluid may be delivered through the branch lines to any location on each floor. The branch lines are usually suspended on hangers attached to the structural ceiling of each floor. Sprinklers, which serve to discharge the fluid in the event of a fire, are connected to the branch lines by flexible conduits. The use of flexible conduits provides a great advantage as it allows the position of the sprinklers to be easily adjusted, both laterally and vertically, in relation to the decorative ceiling which may be suspended beneath the structural ceiling of each floor. The flexible conduit saves time during installation, as it obviates the need for the technician to install a rigid pipe assembly, comprised of threaded pipe elements and threaded fittings, to connect the branch line to each sprinkler head on the floor. With a rigid pipe assembly even a minor miscalculation, either in the design or installation, can be aesthetically and functionally unacceptable, and require a redesign and reinstallation.

As with many other fire safety related components, flexible conduits and the assemblies in which they are used must be approved into various categories by different agencies such as Underwriters' Laboratories (UL), the National Fire Protection Association (NFPA) and Factory Mutual (FM). Installations using approved components must be inspected and must pass inspection before they are given the stamp of approval which states that they meet the appropriate requirements.

Inspection of fire suppression sprinkler systems poses various practical problems due to the general inaccessibility of the sprinklers and their connecting conduits because they are often mounted high among ceiling structures, such as rafters or truss work, or above storage racks in warehouses high above the floor. In addition to the inaccessibility of the assemblies, inspection is further complicated by the fact that, from a distance, approved assemblies can be confused with non-approved assemblies or assemblies approved in other categories. A visual inspection of each sprinkler assembly therefore requires that an inspector mount a ladder, scaffolding, or a lift to view each assembly in detail to ensure that approved components which meet the requirements have been used. There is clearly a need for an identification device which makes inspection of sprinkler conduit assemblies easier to accomplish.

DE3840721 discloses a sanitary hose which exhibits a metal casing and at least one connection piece. The sanitary hose has, on the outside, a flexible outer hose, which is generally colored.

US6488097 discloses a sprinkler assembly for use with a piping network of a fire suppression system comprising a sprinkler and wherein a flexible conduit has a first end connectable in fluid communication with said piping network of said fire suppression system and a second end connected in fluid communication with the sprinkler. Further, the document discloses that in order to improve the installation of the sprinkler heads within the support system visible marks are added to the flexible conduits.

### SUMMARY

The invention contemplates a method of identifying a sprinkler assembly according to claim 1. In an example method, the sprinkler assembly has a sprinkler attached to a flexible conduit. The example method comprises surrounding a portion of the flexible conduit with a sleeve, the sleeve having visible markings thereon corresponding to at least one of a plurality of characteristics of the sprinkler assembly. The markings may comprise color fields, such as orange, yellow or other highly visible hues. By way of further example, the markings may comprise patterns of contrasting color. The markings may also comprise indicia.

The characteristics identified by the sleeve can include (but are not limited to) the manufacturer of the assembly, the length of the conduit, the diameter of the conduit, the sprinkler K factor, the particular agency listing, the particular agency category listing, and combinations thereof.

Further preferred embodiments of the method according to the invention are claimed in dependent claims 2-11.

### BRIEF DESCRIPTION OF THE DRAWINGS

FIG. 1 is an isometric view of an example sprinkler assembly embodiment according to the invention;
FIG. 2 is a side view of an example combination of a flexible conduit and sleeve according to the invention;
FIG. 3 is an isometric view of an example sleeve embodiment according to the invention; and
FIG. 4 is an isometric view of an example sleeve embodiment according to the invention.

### DETAILED DESCRIPTION

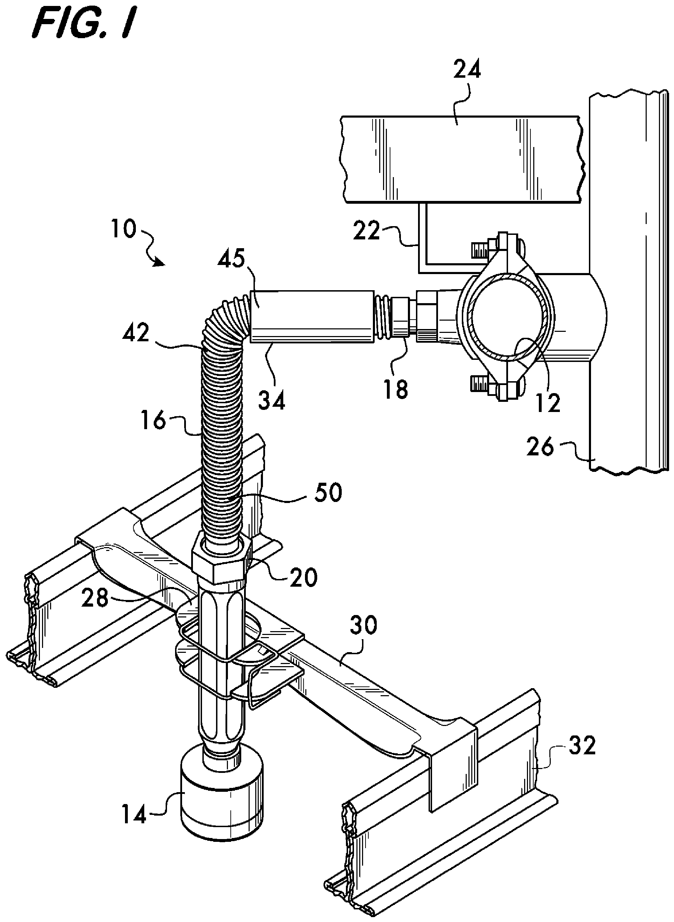

FIG. 1 shows an assembly 10 for connecting a branch line 12 of a fire suppression system to a sprinkler 14. Note that sprinkler is defined herein as any device which discharges a fire suppression fluid, and includes, but is not limited to, items such as sprinklers, heads, nozzles, emitters and the like, whether they be open or closed and open in response to a fire. Assembly 10 comprises a flexible conduit 16 which has a first end 18 connected to the branch line 12, and a second end 20 which is connected to the sprinkler 14. The branch line 12 is supported by a pipe hanger 22
attached to a portion of the structure in which the fire suppression system is mounted, in this example, to the structural ceiling 24 of a building. Branch line 12 is one of many branch lines connected to a riser pipe 26 in fluid communication with a pressurized source of a fire suppressing fluid, such as water (not shown). A portion of the assembly 10 near the second end 20 of the flexible conduit 16 is engaged by a bracket 28 that is mounted on a cross beam 30 which extends between and is mounted on support rails 32 which support a decorative ceiling, such as a suspended ceiling or a drop ceiling (not shown) intended to hide the structural ceiling 24. Other mounting configurations are also feasible, the configuration shown in Figure 1 being by way of example only.

As shown in Figure 1, a sleeve 34 covers a portion of the flexible conduit 16. Sleeve 34 is positioned on conduit 16 between first and second ends 18 and 20. In this example sleeve 34 is positioned near first end 18, where it may be highly visible to an inspector looking up from the ground beneath the installation. However, the sleeve 34 is slidably movable along the conduit 16 so that it may be positioned at any one of a plurality of positions between the first and second ends where it will be most easily seen.

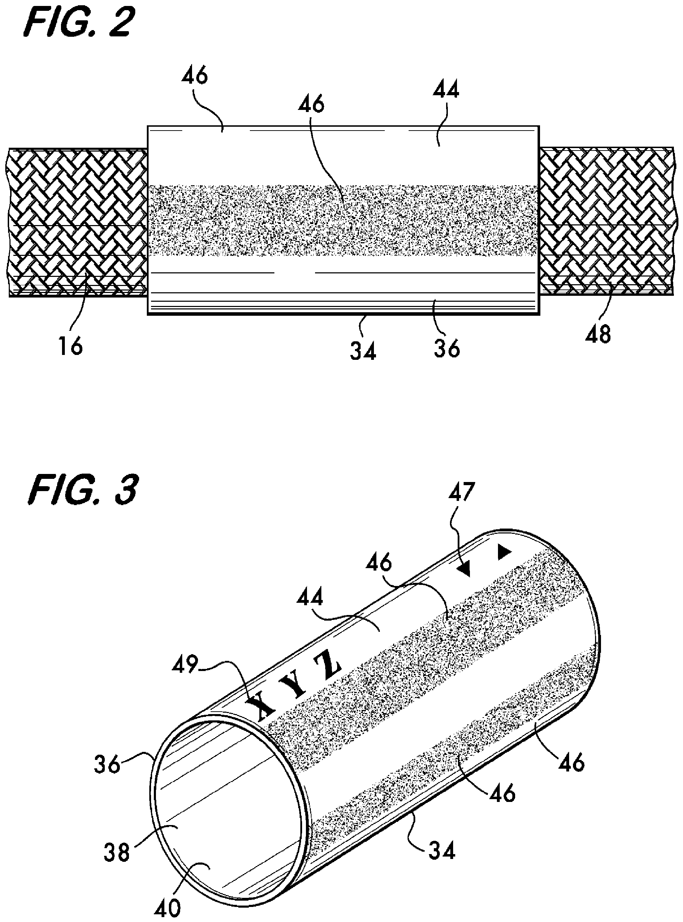

As shown in detail in Figure 3, sleeve 34 comprises a sidewall 36 that surrounds a central space 38. Central space 38 receives the flexible conduit 16. Sidewall 36 in this example is of unitary construction, meaning it has no seam. Sidewalls having seams however are also feasible. Sidewall 36 has an inner surface 40 which contacts the outer surface 42 of the conduit 16 (see Figure 1). Friction between the inner surface 40 of sidewall 36 and the outer surface 42 of the conduit 16 may be used to hold the sleeve 34 in the desired position once that position has been determined.

Sidewall 36 of sleeve 34 also has an outer surface 44. Outer surface 44 will be visible for inspection of the sprinkler assembly 10, and therefore it is advantageous to enhance its visibility. This may be done, for example, by having an outer surface 44 with a contrasting color from the conduit 16 (a "color field" 45, shown in Figure 1). Highly visible colors, such as orange, are effective at enhancing the visibility. In addition to or instead of a color field, markings comprising patterns of contrasting color may be used. An example of such an embodiment is shown in Figures 2 and 3, where longitudinal stripes 46 of contrasting colors are found on the outer surface 44 of the sidewall 36 of the sleeve 34. Additionally, it is further advantageous to provide symbols 47 or indicia 49 on the outer surface 44 as shown in Figure 3.

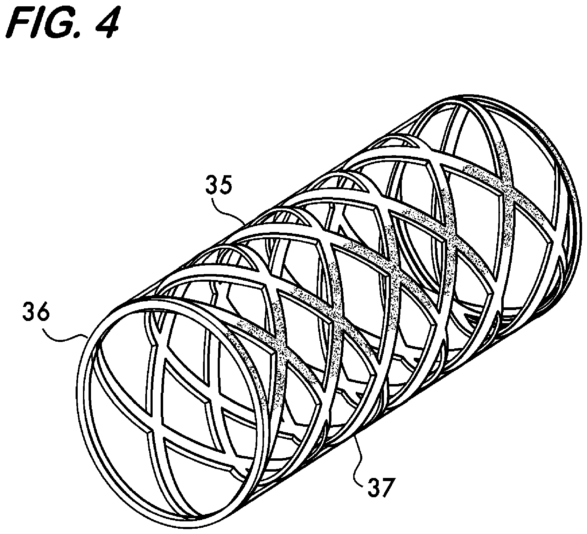

Figure 4 illustrates a sleeve embodiment 35 wherein sidewall 36 comprises an open mesh 37. Mesh 37 may be woven, knitted, or braided for example, or may be extruded, continuously formed, or formed by perforating an otherwise solid sidewall.

It is also advantageous that the sidewall 36 of sleeves 34 or 35 be flexible so as to deform and accommodate the shape of the conduit 16. This flexibility will facilitate moving and positioning of the sleeve 34 along a curved conduit as well as permit the conduit 16 to deform relatively unhindered. To this end, the sleeves 34 and 35 may be made of flexible, resilient materials such as nylon, polyethylene as well as other polymer compounds.

Figure 2 illustrates a combination flexible conduit 16 and sleeve 34. Sleeve 34 surrounds a portion of the conduit between its first and second ends (only one end being shown). In the example shown in Figure 2, the flexible conduit 16 has a braided outer layer 48 formed of stainless steel wire. Other materials are of course feasible. The example embodiment of the conduit 16 shown in Figure 1 has a corrugated outer layer 50. Other types of construction for the flexible conduit 16 are also feasible. Furthermore, it is understood that sleeve 35, comprising an open mesh (see Figure 4), could also be used in combination with the conduit 16.

Sleeves 34 or 35 according to the invention used in combination with flexible conduits 16, for example, in fire suppression systems, permit the characteristics of the assembly or combination to be readily visually identified from a distance. This property of ready visual identification along with the ability to position the sleeve at a visible portion of the conduit greatly simplifies the work of inspectors, obviating the need for ladders, lifts and scaffolding. The sleeve may be used to indicate any of a number of characteristics of the assembly or combination, including, without limitation, the manufacturer, the length of the conduit, the diameter of the conduit, the type of sprinkler required for the conduit, the particular agency listing, the particular agency category listing, as well as other information.

## Claims

1. A method of identifying a sprinkler assembly (10) in a piping network of a fire suppression system, wherein said sprinkler assembly comprises:
a sprinkler (14);
flexible conduit (16) and a sleeve (34);
**characterized in that**:
said sleeve (34) covers at least a portion of said flexible conduit (16) and comprises a sidewall (36) surrounding a central space (38) receiving said conduit (16), said sleeve is movable axially along said conduit (16) and positionable at one of a plurality of positions between a first and a second end (18, 20) of said conduit (16), said first end (18) is connectable in fluid communication with said piping network of said fire suppression system and a second end (20) connected in fluid communication with said sprinkler (14);
said method comprises surrounding a portion of said flexible conduit (16) with a sleeve (34), said sidewall (36) has an outer surface (44), said outer surface (44) of said sidewall (36) having visible markings thereon corresponding to at least one of a plurality of characteristics of said sprinkler assembly (10).

2. The method according to claim 1, wherein said markings comprise color fields; or
said markings comprise patterns of contrasting color; or
said markings comprise indicia (49); or
said markings comprise symbols (47); or
said characteristics are selected from the group consisting essentially of a manufacturer of the assembly (10), a length of the conduit (16), a diameter of the conduit (16), a sprinkler (14) K factor, a particular agency listing, a particular agency category listing, and combinations thereof.

3. The method according to claim 1, wherein said sidewall (36) is a unitary construction having no seam.

4. The method according to claim 1, wherein said sidewall (36) is an open mesh (37).

5. The method according to claim, 1 wherein said sidewall (36) has an inner surface (40), at least a portion of said inner surface (40) contacting an outer surface (42) of said conduit (16).

6. The method according to claim 5, wherein friction between said inner and outer surfaces (40, 42) holds said sleeve (34) in said one of said plurality of positions along said conduit (16).

7. The method according to claim 1, wherein said sidewall (36) has an outer surface (44), said outer surface (44) of said sidewall (36) having a contrasting color from said conduit (16).

8. The method according to claim 1, wherein said sidewall (36) has an outer surface (44), said outer surface (44) of said sidewall (36) having a plurality of contrasting stripes (46) thereon.

9. The method according to claim 1, wherein said sidewall (36) is flexible and will deform to accommodate the shape of said conduit (16).

10. The method according to claim 1, wherein said conduit (16) comprises a braided outer layer (48).

11. The method according to claim 1, wherein said conduit (16) comprises a corrugated outer layer (50).

## Patentansprüche

1. Verfahren zum Identifizieren einer Sprinkleranlage (10) in einem Rohrnetz eines Feuerlöschsystems, wobei die Sprinkleranlage aufweist:
einen Sprinkler (14);
eine flexible Leitung (16) und eine Hülse (34);
**dadurch gekennzeichnet, dass**:
die Hülse (34) zumindest einen Abschnitt der flexiblen Leitung (16) bedeckt und eine Seitenwand (36) aufweist, die einen zentralen Raum (38) umgibt, der die Leitung (16) aufnimmt, wobei die Hülse entlang der Leitung (16) axial beweglich und in einer von mehreren Positionen zwischen einem ersten und einen zweiten Ende (18, 20) der Leitung (16) positionierbar ist, wobei das erste Ende (18) in Fluidverbindung mit dem Rohrnetz des Feuerlöschsystems verbindbar ist, und ein zweites Ende (20) in Fluidverbindung mit dem Sprinkler (14) verbunden ist;
wobei das Verfahren das Umgeben eines Abschnitts der flexiblen Leitung (16) mit der Hülse (34) umfasst, wobei die Seitenwand (36) eine Außenseite (44) aufweist, wobei die Außenseite (44) der Seitenwand (36) sichtbare Markierungen aufweist, die zumindest einer von mehreren Eigenschaften der Sprinkleranlage (10) entspricht.

2. Verfahren nach Anspruch 1, wobei die Markierungen Farbfelder umfassen, oder
wobei die Markierungen Muster kontrastierender Farbe umfassen, oder
wobei die Markierungen eine Anzeige (49) umfassen, oder
wobei die Markierungen Symbole (47) umfassen, oder
wobei die Eigenschaften aus einer Gruppe ausgewählt sind, die im Wesentlichen einen Hersteller der Anlage (10) eine Länge der Leitung (16), einen Durchmesser der Leitung (16), einen K-Faktor des Sprinklers (14), eine bestimmte Agenturauflistung sowie Kombinationen hieraus bezeichnen.

3. Verfahren nach Anspruch 1, wobei die Seitenwand (36) eine einheitliche, saumfreie Konstruktion ist.

4. Verfahren nach Anspruch 1, wobei die Seitenwand (36) ein offenes Drahtgewebe (37) ist.

5. Verfahren nach Anspruch 1, wobei die Seitenwand (36) eine Innenseite (40) aufweist, wobei zumindest ein Abschnitt der Innenseite (40) eine Außenseite (42) der Leitung (16) kontaktiert.

6. Verfahren nach Anspruch 1, wobei Reibung zwischen den Innen- und Außenseiten (40, 42) die Hülse (34) in einer der mehreren Positionen entlang der Leitung (16) hält.

7. Verfahren nach Anspruch 1, wobei die Außenseite (44) der Seitenwand (36) eine in Bezug auf die Leitung (16) kontrastierende Farbe aufweist.

8. Verfahren nach Anspruch 1, wobei die Außenseite (44) der Seitenwand (36) mehrere kontrastierende Streifen (46) aufweist.

9. Verfahren nach Anspruch 1, wobei die Seitenwand (36) flexibel ist und sich zur Aufnahme der Form der Leitung (16) verformt.

10. Verfahren nach Anspruch 1, wobei die Leitung (16) eine geflochtene Außenschicht (48) aufweist.

11. Verfahren nach Anspruch 1, wobei die Leitung (16) eine geflochtene Außenschicht (50) aufweist.

## Revendications

1. Procédé d'identification d'un ensemble d'extincteur (10) dans un réseau de canalisations d'un système extincteur d'incendie, dans lequel ledit ensemble d'extincteur comprend :
un extincteur (14) ;
un conduit souple (16) et un manchon (34) ;
**caractérisé en ce que** :
ledit manchon (34) recouvre au moins une partie dudit conduit souple (16) et comprend une paroi latérale (36) entourant un espace central (38) recevant ledit conduit souple (16), ledit manchon est mobile axialement le long dudit conduit (16) et positionnable dans l'une d'une pluralité de positions entre une première et une seconde extrémité (18, 20) dudit conduit (16), ladite première extrémité (18) peut être raccordée en communication fluidique avec ledit réseau de canalisations dudit système d'extinction d'incendie et une seconde extrémité (20) étant en communication fluidique avec ledit extincteur (14) ;
ledit procédé comprend le fait d'entourer une partie dudit conduit souple (16) avec un manchon (34), ladite paroi latérale (36) a une surface externe (44), ladite surface externe (44) de ladite paroi latérale (36) portant des repères correspondant à au moins l'une d'une pluralité de caractéristiques dudit ensemble d'extincteur (10).

2. Procédé selon la revendication 1, dans lequel lesdits repères comprennent des champs de couleurs ; ou
lesdits repères comprennent des motifs de couleur contrastée ; ou
lesdits repères comprennent des indices (49) ; ou
lesdits repères comprennent des symboles (47) ; ou
lesdites caractéristiques sont choisies dans le groupe constitué sensiblement d'un fabricant de l'ensemble (10), d'une longueur du conduit (16), d'un diamètre du conduit (16), d'un facteur K de l'extincteur (14), d'une liste particulière d'agences, d'une liste particulière de catégories d'agences et de leurs combinaisons.

3. Procédé selon la revendication 1, dans lequel ladite paroi latérale (36) est une structure unitaire n'ayant pas de jonction.

4. Procédé selon la revendication 1, dans lequel ladite paroi latérale (36) est un tissu à mailles ouvertes (37).

5. Procédé selon la revendication 1, dans lequel ladite paroi latérale (36) a une surface interne (40), au moins une partie de ladite surface interne (40) étant en contact avec une surface externe (42) dudit conduit (16).

6. Procédé selon la revendication 5, dans lequel le frottement entre les surfaces interne et externe (40, 42) maintient ledit manchon (34) dans ladite une de ladite pluralité de positions le long dudit conduit (16).

7. Procédé selon la revendication 1, dans lequel ladite paroi latérale (36) a une surface externe (44), ladite surface externe (44) de ladite paroi latérale (36) ayant une couleur contrastée vis-à-vis de celle dudit conduit (16).

8. Procédé selon la revendication 1, dans lequel ladite paroi latérale (36) a une surface externe (44), ladite surface externe (44) de ladite paroi latérale (36) portant une pluralité de bandes contrastées (46).

9. Procédé selon la revendication 1, dans lequel ladite paroi latérale (36) est souple et se déformera pour recevoir la forme dudit conduit (16).

10. Procédé selon la revendication 1, dans lequel ledit conduit (16) comprend une couche externe tressée (48).

11. Procédé selon la revendication 1, dans lequel ledit conduit (16) comprend une couche externe ondulée (50).
